# EUROPÄISCHE PATENTSCHRIFT

(11) **EP 3 768 527 B1**
(45) Veröffentlichungstag und Bekanntmachung des Hinweises auf die Patenterteilung: **18.05.2022**
(21) Anmeldenummer: 19701463.2
(22) Anmeldetag: 14.01.2019
(51) Int. Cl.: B60C 13/00

(54) **FAHRZEUGLUFTREIFEN**
VEHICLE PNEUMATIC TYRE
PNEUMATIQUE DE VÉHICULE

(30) Priorität: 20.03.2018 DE 102018204245
(43) Veröffentlichungstag der Anmeldung: 27.01.2021
(73) Patentinhaber: Continental Reifen Deutschland GmbH, 30165 Hannover (DE)
(72) Erfinder: RITTWEGER, Stefan, 30419 Hannover (DE)
(74) Vertreter: Continental Corporation
(86) Internationale Anmeldenummer: PCT/EP2019/050747
(87) Internationale Veröffentlichungsnummer: WO 2019/179666

(56) Entgegenhaltungen:
- EP-B1- 2 720 887
- JP-A- 2009 143 488
- JP-A- 2014 061 820

## Beschreibung

Die Erfindung betrifft einen Fahrzeugluftreifen mit Seitenwänden und mit zumindest einer Schraffurfläche bzw. einem schraffierten Flächenelement auf zumindest einer Seitenwand, wobei die Schraffurfläche bzw. das Flächenelement eine Vielzahl von nebeneinander verlaufenden Schraffurrippen mit zwei seitlichen Flanken aufweist, wobei die eine seitliche Flanke der Schraffurrippen eine Oberflächenbeschaffenheit aufweist, welche sich von jener an der anderen seitlichen Flanke der Schraffurrippen unterscheidet und wobei Oberflächenbeschaffenheit zumindest einer seitlichen Flanke der Schraffurrippen eine dreidimensionale Struktur ist.

Auf Seitenwänden von Fahrzeugluftreifen ausgebildete Schraffurflächen haben vorrangig die Aufgabe, einen Kontrast zu vorhandenen glatten Flächenbereichen der Seitenwände zu schaffen, um derart beispielsweise die Lesbarkeit von auf den Seitenwänden befindlichen Schriftzügen zu verbessern. Darüber hinaus lassen sich mit Schraffurflächen konstruktionsbedingte Unebenheiten in den Reifenseitenwänden kaschieren. Erwünscht ist oft auch eine dreidimensionale Wirkung von Schaffurflächenelementen, da echte dreidimensionale Gestaltungen an Seitenwänden aus Gründen der Uniformity des Reifens nicht möglich sind.

Ein Fahrzeugluftreifen der eingangs genannten Art ist beispielsweise aus der JP 2009 143 488 A bekannt. Der Fahrzeugluftreifen weist Seitenwände auf, welche jeweils mit einer umlaufenden Schraffurfläche versehen sind. Gemäß einem Ausführungsbeispiel sind die Schraffurflächen aus einer Vielzahl von Schraffurrippen gebildet, welche einen halbkreisförmigen Querschnitt und dementsprechend im Querschnitt zwei jeweils über einen Viertelkreis verlaufende seitliche Flanken aufweisen. Eine der seitlichen Flanken jeder Schraffurrippe ist mit in Längserstreckung der Schraffurrippe verlaufenden Rillen versehen, sodass die eine seitliche Flanke eine Oberflächenbeschaffenheit aufweist, welche sich von jener der anderen seitlichen Flanke unterscheidet. Solche Schraffurflächen sollen etwaige Unebenheiten auf den Seitenwände besonders gut kaschieren.

Aus der EP 2 720 887 B1 ist ein Fahrzeugluftreifen mit Seitenwänden bekannt, auf welchen Schraffurflächen aus stängelförmigen Erhebungen ausgebildet sind, wobei die stängelförmigen Erhebungen in einer Dichte von mindestens fünf Stängel pro Quadratmillimeter angeordnet sind. Ferner verlaufen auf jeder Seitenwand zumindest zwei Rippen, welche die stängelförmigen Erhebungen der Schraffurfläche durchqueren und daher mit den stängelförmigen Erhebungen abschnittsweise bedeckt sind.

Die JP 2014 061 820 A offenbart einen Fahrzeugluftreifen mit Seitenwänden, welche Schraffurflächen mit im Querschnitt trapezförmigen Erhebungen aufweisen, wobei Erhebungen mit einem ersten trapezförmigen Querschnitt und Erhebungen mit einem zweiten trapezförmigen Querschnitt, welcher sich vom ersten trapezförmigen Querschnitt unterscheidet, vorgesehen sind.

Aus der US 2014/021662 A1 ist ferner ein Fahrzeugluftreifen bekannt, welcher auf den Seitenwänden Schraffurflächen aufweist, die im Querschnitt dreieckige Schraffurrippen umfassen, deren beide seitliche Flanken zusätzlich mit langgestreckt kegelförmigen oder stängelartigen Vorsprüngen strukturiert sind. Die Anzahl dieser Vorsprünge beträgt zumindest fünf pro Quadratmillimeter, ihre mittlere Querschnittsfläche beträgt 0,003 mm² bis 0,06 mm². Die stängelartigen Vorsprünge sind parallel zueinander ausgerichtet und weisen jeweils eine mittlere Breite von 0,03 mm bis 0,10 mm und eine Höhe von mindestens 0,1 mm auf. Weitere Ausführungen von Schraffurflächen auf Seitenwänden mit nebeneinander verlaufenden Schraffurrippen sind beispielsweise aus der EP 2 502 758 A1 und der DE 10 2008 010 486 A1 bekannt.

Der Erfindung liegt daher die Aufgabe zugrunde, Schraffurflächen aus Schraffurrippen weiter zu verbessern, insbesondere um eine besonders auffallende Kontrastwirkung und durch Lichtreflexion und Schattenbildung verursachte optische Effekte zu erzielen, die mit den bislang bekannten Schraffuren nicht möglich sind.

Gelöst wird die gestellte Aufgabe erfindungsgemäß dadurch, dass die dreidimensionale Struktur die seitliche Flanke der jeweiligen Schraffurrippe überzieht oder dass die dreidimensionale Struktur aus einer Vielzahl von parallel zueinander und im rechten Winkel zur Erstreckung der Schraffurrippen verlaufenden Zusatzrippen mit einer Breite an ihrer Basis von insbesondere 0,1 mm bis 0,5 mm besteht.

Da die Oberflächenbeschaffenheit der seitlichen Flanken der Schraffurrippen in unmittelbarem Zusammenhang mit der Lichtabsorptions-/ bzw. Lichtreflexionswirkung der seitlichen Flanken steht, weisen gemäß der Erfindung ausgebildete Schraffurrippen unterschiedlich stark lichtreflektierende seitliche Flanken auf. Dadurch wird je nach Lichteinfall und Lichtintensität eine besonders auffallende und optisch vorteilhafte Kontrastwirkung erzeugt. Zusätzlich erzeugt die unterschiedliche Oberflächenbeschaffenheit der Flanken der Rippen Schatteneffekte, die besonders auf dem schwarzen Gummi der Seitenwände ein deutliches Hervorheben der Schraffuren gegenüber den umgebenden Flächenbereichen bewirken.

Eine besonders gute Kontrastwirkung, die je nach Lichteinfall besonders deutlich sein kann, lässt sich bei der Ausgestaltung der dreidimensionalen Struktur mit den Zusatzrippen erzielen. Es gibt daher Schraffurrippen mit zumindest an einer seitlichen Flanke zusätzlich aufgesetzten Rippen.

Besonders deutlich ist die durch Lichtabsorption und Lichtreflexion erzielbare Kontrastwirkung der Schraffurrippen gegenüber den sonstigen Flächenbereichen der Seitenwand bei einer Ausführung, bei welcher, wenn nebeneinander verlaufende Schraffurrippen betrachtet werden, die die eine Oberflächenbeschaffenheit aufweisende Flanke an der einen Schraffurrippe der die andere Oberflächenbeschaffenheit aufweisenden Flanke an der benachbarten Schraffurrippe zugewandt ist.

Mit bevorzugten Ausführungen lässt sich eine besonders effektvolle, unterschiedliche Oberbeschaffenheit der beiden seitlichen Flanken der Schraffurrippen realisieren. Bei einer diesbezüglich besonders bevorzugten Ausführung weisen die beiden seitliche Flanken der Schraffurrippen als Oberflächenbeschaffenheit unterschiedliche dreidimensionale Strukturen auf.

Auch bezüglich der Ausgestaltung der dreidimensionalen Strukturen sind verschiedene Möglichkeiten offen, die je nach gewünschter Kontrastwirkung eingesetzt werden können. Bei einer bevorzugten Ausgestaltung besteht die dreidimensionale Struktur, welche die seitliche Flanke der jeweiligen Schraffurrippe überzieht, aus einer Vielzahl von vorzugsweise unmittelbar nebeneinander ausgebildeten Erhebungen und Vertiefungen an der bzw. den betreffenden Flanken der Schraffurrippen, wobei die Erhebungen und Vertiefungen eine Höhe bzw. Tiefe von insbesondere 0,5 mm bis 0,8 mm aufweisen.

Die Zusatzrippen können sämtlich gleich oder zumindest gleichartig ausgeführt sein und, im Querschnitt betrachtet, insbesondere dreieckig, trapezförmig oder rund ausgestaltet sein sowie unter gegenseitigen Abständen zueinander angeordnet sein oder unmittelbar aneinander anschließen.

Besonders deutlich ist die Kontrastwirkung bei Schraffurrippen, bei welchen jeweils die eine seitliche Flanke eine von Strukturen freie, glatte Fläche ist.

Bevorzugte Ausgestaltungen der Schraffurrippen umfassen solche, bei welchen die Schraffurrippen, im Querschnitt betrachtet, dreieckig, insbesondere gleichschenkelig dreieckig, oder trapezförmig, insbesondere gleichschenkelig trapezförmig, ausgeführt sind.

Bevorzugt verlaufen die Flanken der Schraffurrippen, im Querschnitt betrachtet, unter einem Winkel von 5° bis 60°, insbesondere von höchstens 30°, zur Seitenwand.

Besonders auffällige Kontraste lassen sich auch mit einer weiteren bevorzugten Ausführung erreichen, bei welcher die seitlichen Flanken der Schraffurrippen unter unterschiedlich großen Winkeln zur Seitenwand verlaufen, wobei der größere Winkel um insbesondere 5° bis 30° größer ist als der kleinere.

Eine unterschiedlich starke Lichtreflexion wird ferner bei einer weiteren speziellen Ausgestaltung von Schraffurflächen erreicht, in welchen Schraffurrippen vorgesehen sind, welche zumindest abschnittsweise über lokale, insbesondere kuppelartige Vorsprünge, welche insbesondere eine Höhe von 0,1 mm bis 0,3 mm aufweisen, verlaufen.

Weitere Merkmale, Vorteile und Einzelheiten der Erfindung werden nun anhand der Zeichnung, die schematisch Ausführungsbeispiele der Erfindung darstellt, näher beschrieben. Dabei zeigen
Fig. 1 eine Ansicht von Schraffurrippen einer Schraffurfläche einer Seitenwand eines Fahrzeugluftreifens mit einer ersten Variante der Erfindung,
Fig. 1a einen Querschnitt durch die Schraffurrippen der Fig. 1,
Fig. 2 eine Ansicht von Schraffurrippen einer Schraffurfläche einer Seitenwand eines Fahrzeugluftreifens mit einer zweiten Variante der Erfindung,
Fig. 3 eine Ansicht von Schraffurrippen einer Schraffurfläche einer Seitenwand eines Fahrzeugluftreifens mit einer dritten Variante der Erfindung und
Fig. 4 und Fig. 5 jeweils weitere Ausführungen von Schraffurrippen im Querschnitt.

Auf der Seitenwand von Fahrzeugluftreifen sind üblicherweise die vorgeschriebenen Angaben, wie Dimensionsangaben, der Speedindex, der Hersteller, der Verwendungszweck (Sommer-/ Winterreifen) und dergleichen angegeben. Diese Angaben befinden sich auf glatten Flächenbereichen und sind aus erhabenen Elementen im Gummimaterial der Seitenwand ausgebildet. Es verbleibt jedoch einiges an Freifläche auf den Seitenwänden von Fahrzeugluftreifen für Schraffuren, welche aus einer Vielzahl von Erhebungen und Vertiefungen gebildet sind und einerseits den Kontrast zu den glatten Flächenbereichen in der Seitenwand, auf welchen die erwähnten Schriftzüge angebracht sind, deutlich machen und andererseits etwaige konstruktionsbedingte Unebenheiten an den Seitenwänden kaschieren. Die Schraffuren werden im Zuge der Vulkanisation durch in den Formteilen bzw. Formsegmenten der Vulkanisationsform ausgebildeten Vertiefungen erzeugt. Je nach Art der Schraffur werden diese Vertiefungen, insbesondere in bekannter Weise, durch Fräsverfahren und/oder mittels Lasergravur erzeugt.

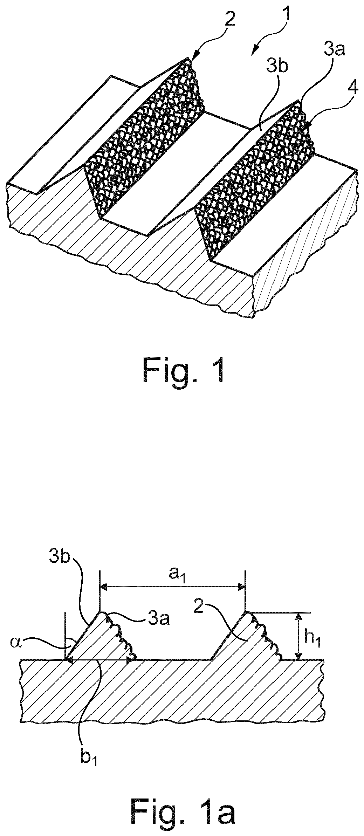

Fig. 1 bis Fig. 3 zeigen jeweils einen Ausschnitt einer Schraffurfläche 1 bzw. eines Flächenelementes mit gerade sowie parallel zueinander verlaufenden Schraffurrippen 2, welche eine Basisschraffur in der Schraffurfläche 1 bilden. Die Schraffurrippen 2 können alternativ auch wellen-, bogenförmig oder dergleichen verlaufen und sind entweder das die Schraffurfläche umgebenden Niveau der Seitenwand überragende Erhebungen oder in einer in der Seitenwand ausgebildeten Vertiefung verlaufende, das sonstige Niveau der Seitenwand vorzugsweise nicht überragende Erhebungen.

Bei den in Fig. 1 bis 3 gezeigten Ausführungsbeispielen sind die Schraffurrippen 2, im Querschnitt betrachtet, gleichschenkelig dreieckig und weisen eine den einen Schenkel des Dreieckes bildende strukturierte seitliche Flanke 3a und eine den anderen Schenkel des Dreieckes bildende glatte bzw. nicht strukturierte seitliche Flanke 3b auf. Es weist daher die eine seitliche Flanke 3a der Schraffurrippen 2 eine Oberflächenbeschaffenheit auf, welche sich von jener der anderen seitlichen Flanke 3b der Schraffurrippen 2 unterscheidet. Gemäß Fig. 1a weisen die Schraffurrippen 2 an ihrer Basis eine Breite b₁ von 0,1 mm bis 0,7 mm, ferner eine maximale Höhe h₁ von 0,1 mm bis 0,8 mm und voneinander einen von den Stellen mit maximaler Höhe h₁ ermittelten gegenseitigen Abstand a₁ von 0,2 mm bis 1,5 mm auf.

Die seitlichen Flanken 3a, 3b verlaufen zum Niveau der Schraffurfläche 1 bzw. zur Seitenwand unter übereinstimmenden Winkeln α von 5° bis 60°, vorzugsweise bis 45°, insbesondere von höchstens 30°. Die Schraffurrippen 2 sind derart ausgeführt, dass die strukturierte seitliche Flanke 3a einer Schraffurrippe 2 der glatten seitlichen Flanke 3b der jeweils benachbart verlaufenden Schraffurrippe 2 zugewandt ist.

Bei der Ausführung gemäß Fig. 1 ist die strukturierte seitliche Flanke 3a mit einer ungleichmäßigen Struktur 4 versehen, vorzugsweise überzogen, welche der seitlichen Flanke 3a eine Rauheit, d.h. eine Unebenheit, verleiht. Die Struktur 4 setzt sich beispielsweise aus einer Vielzahl von insbesondere unmittelbar nebeneinander ausgebildeten Erhebungen und Vertiefungen zusammen, deren Höhe bzw. Tiefe in einem Bereich von 0,05 mm bis 0,8 mm variiert.

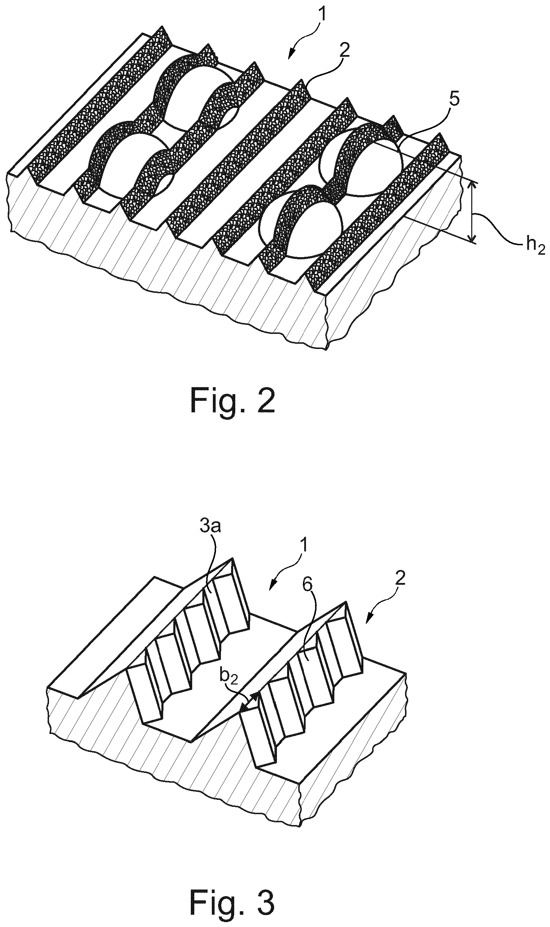

Die in Fig. 2 gezeigte Variante unterscheidet sich von jener gemäß Fig. 1 und 1a dadurch, dass einige Schraffurrippen 2 über in Erstreckungsrichtung der Schraffurrippen 2 voneinander beabstandete, lokal ausgebildete, im gezeigten Ausführungsbeispiel kuppelartige, insbesondere halbkugelförmige, Vorsprünge 5 verlaufen, welche beispielsweise eine Höhe h₂ von 0,1 mm bis 0,3 mm, insbesondere von 0,2 mm, aufweisen. Wie in Fig. 2 gezeigt, können bei entsprechender Dimensionierung der Vorsprünge 5 einander benachbarte Schraffurrippen 2 über dieselben Vorsprünge 5 verlaufen. Die Vorsprünge 5 weisen in Erstreckungsrichtung der Schraffurrippen 5 gegenseitige Abstände von einigen Millimetern, beispielsweise 3,0 mm bis 10, 0 mm auf.

Fig. 3 zeigt eine Ausführungsform, welche sich von der Ausführung gemäß Fig. 1 dadurch unterscheidet, dass auf der strukturierten seitlichen Flanke 3a der Schraffurrippen 2 eine Vielzahl von Zusatzrippen 6 aufgesetzt ist. Die Zusatzrippen 6 verlaufen gerade, ferner in Draufsicht auf die Schraffurfläche 1 senkrecht zur Erstreckungsrichtung der Schraffurrippen 2 sowie insbesondere über die gesamte Erstreckung der seitlichen Flanke 3a. Ferner sind die Zusatzrippen 6 beim gezeigten Ausführungsbeispiel, im Querschnitt betrachtet, gleichschenkelig dreieckig ausgebildet und verlaufen unter gegenseitigen Abständen zueinander. Die Zusatzrippen 6 können jedoch auch unmittelbar nebeneinander ausgebildet sein und eine andere Querschnittsform, etwa rund bzw. halbkreisförmig, aufweisen. An ihrer an der seitlichen Flanke 3a liegenden Basis weisen die Zusatzrippen 6 eine Breite b₂ von 0,1 mm bis 0,5 mm auf.

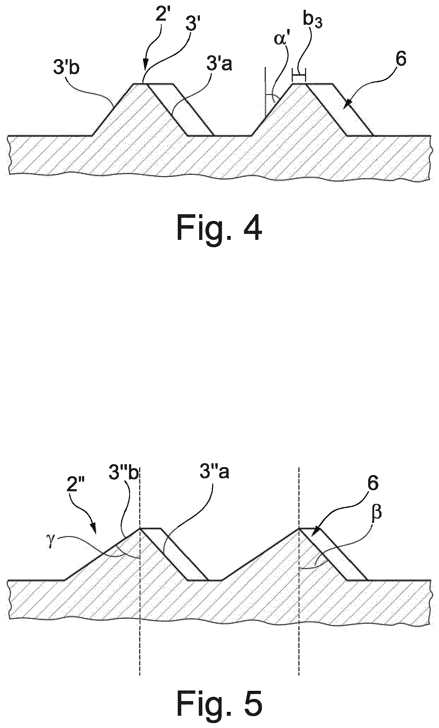

Anhand der Fig. 4 und 5 werden nachfolgend Schraffurrippen 2', 2" beschrieben, welche Varianten der Schraffurrippe 2 sind, wobei bei den gezeigten Ausführungsbeispielen exemplarisch Zusatzrippen 6 vorgesehen sind. Höhe und Breite der Schraffurrippen 2', 2" können der bereits erwähnten Höhe und Breite der Schraffurrippen 2 entsprechen.

Fig. 4 zeigt zwei nebeneinander verlaufende, im Querschnitt gleichschenkelig trapezförmige Schraffurrippen 2', welche - entsprechend ihrer Trapezform - eine Plateaufläche 3' mit einer Breite b₃ von 0,05 mm bis 0,5 mm aufweisen. An die Plateaufläche 3' schließen Trapezschenkel bildende seitliche Flanken 3'a, 3'b an, welche zur nicht gezeigten Seitenwand unter einem Winkel a von 5° bis 60°, vorzugsweise bis 45°, insbesondere von höchstens 30°, verlaufen.

Bei der in Fig. 5 gezeigten Variante sind die Schraffurrippen 2" mit einem asymmetrisch dreieckigen Querschnitt vorgesehen, welche im Beispiel jeweils durch eine strukturierte seitliche Flanke 3"a und eine glatte seitliche Flanke 3"b begrenzt sind. Die strukturierte seitliche Flanke 3"a verläuft zur Seitenwand unter einem Winkel β und die glatte seitliche Flanke 3"b verläuft zur Seitenwand unter einem vom Winkel β abweichenden Winkel γ. Der Winkel β beträgt 5° bis 60°, der Winkel γ ist um insbesondere mindestens 5° größer als der Winkel β. Bevorzugter Weise ist der Winkel γ um 10° bis 30° größer als der Winkel β.

Die Erfindung ist auf die beschriebenen Ausführungsvarianten nicht beschränkt. Die strukturierte seitliche Flanke kann beliebig strukturiert sein, beispielsweise mit gitterartig verlaufenden Vorsprüngen. Insbesondere können beide Flanken der Schraffurrippen strukturiert sein, wobei sich die Struktur an der einen Flanke von jener an der anderen Flanke unterscheidet. Dabei können die dargestellten bzw. beschriebenen Varianten miteinander kombiniert werden, wobei auch die Querschnittsgestalt der Schraffurrippen unabhängig von den auf den seitlichen Flanken ausgebildeten Strukturen ist. Außerdem können die Flächen zwischen den Schraffurrippen ebenfalls strukturiert sein.

### Bezugsziffernliste

- 1: Schraffurfläche
- 2, 2', 2": Schraffurrippe
- 3a, 3b: seitliche Flanke
- 3': Plateaufläche
- 3'a, 3'b: seitliche Flanke
- 3"a, 3"b: seitliche Flanke
- 4: Struktur
- 5: Vorsprung
- 6: Zusatzrippen
- a₁: Abstand
- b₁, b₂, b₃: Breite
- h₁, h₂: Höhe
- α, β, γ: Winkel

## Patentansprüche

1. Fahrzeugluftreifen mit Seitenwänden und mit zumindest einer Schraffurfläche (1) bzw. einem schraffierten Flächenelement auf zumindest einer Seitenwand, wobei die Schraffurfläche (1) bzw. das Flächenelement eine Vielzahl von nebeneinander verlaufenden Schraffurrippen (2, 2', 2") mit zwei seitlichen Flanken (3a, 3'a, 3"a, 3b, 3'b, 3"b) aufweist, wobei die eine seitliche Flanke (3a, 3'a, 3"a) der Schraffurrippen (2, 2', 2") eine Oberflächenbeschaffenheit aufweist, welche sich von jener an der anderen seitlichen Flanke (3b, 3'b, 3"b) der Schraffurrippen (2, 2', 2") unterscheidet und wobei Oberflächenbeschaffenheit zumindest einer seitlichen Flanke (3a, 3'a, 3"a) der Schraffurrippen (2, 2', 2") eine dreidimensionale Struktur ist,
**dadurch gekennzeichnet,**
**dass** die dreidimensionale Struktur die seitliche Flanke (3a) der jeweiligen Schraffurrippe (2, 2', 2") überzieht oder
**dass** die dreidimensionale Struktur aus einer Vielzahl von parallel zueinander und im rechten Winkel zur Erstreckung der Schraffurrippen (2) verlaufenden Zusatzrippen (6) mit einer Breite (b₂) an ihrer Basis von insbesondere 0,1 mm bis 0,5 mm besteht.

2. Fahrzeugluftreifen nach Anspruch 1, **dadurch gekennzeichnet, dass**, bei nebeneinander verlaufenden Schraffurrippen (2) betrachtet, die Flanke (3a, 3'a, 3"a) der einen Schraffurrippe (2) mit der einen Oberflächenbeschaffenheit der Flanke (3a, 3'a, 3"a) der benachbarten Schraffurrippe (2) mit der anderen Oberflächenbeschaffenheit zugewandt ist.

3. Fahrzeugluftreifen nach Anspruch 1 oder 2, **dadurch gekennzeichnet, dass** die Oberflächenbeschaffenheit beider seitlicher Flanken (3a, 3'a, 3"a) der Schraffurrippen (2, 2', 2") eine dreidimensionale Struktur ist.

4. Fahrzeugluftreifen nach einem der Ansprüche 1 bis 3, **dadurch gekennzeichnet, dass** die dreidimensionale Struktur, welche die seitliche Flanke (3a) der jeweiligen Schraffurrippe (2, 2', 2") überzieht, aus einer Vielzahl von vorzugsweise unmittelbar nebeneinander ausgebildeten Erhebungen und Vertiefungen mit einer Höhe bzw. Tiefe von insbesondere 0,05 mm bis 0,8 mm besteht.

5. Fahrzeugluftreifen nach einem der Ansprüche 1 bis 3, **dadurch gekennzeichnet, dass** die Zusatzrippen (6) gegenseitigen Abstände zueinander aufweisen oder unmittelbar aneinander anschließen.

6. Fahrzeugluftreifen nach einem der Ansprüche 1 bis 3 oder 5, **dadurch gekennzeichnet, dass** die Zusatzrippen (6), im Querschnitt betrachtet, dreieckig, trapezförmig oder rund sind.

7. Fahrzeugluftreifen nach einem der Ansprüche 1, 2 oder 4 bis 6, **dadurch gekennzeichnet, dass** die eine der seitlichen Flanken (3b, 3'b, 3"b) der Schraffurrippen (2, 2', 2") jeweils eine von Strukturen freie, glatte Fläche ist.

8. Fahrzeugluftreifen nach einem der Ansprüche 1 bis 7, **dadurch gekennzeichnet, dass** die Schraffurrippen (2, 2"), im Querschnitt betrachtet, dreieckig, insbesondere gleichschenkelig dreieckig, sind.

9. Fahrzeugluftreifen nach einem der Ansprüche 1 bis 7, **dadurch gekennzeichnet, dass** die Schraffurrippen (2, 2"), im Querschnitt betrachtet, trapezförmig, insbesondere gleichschenkelig trapezförmig, sind.

10. Fahrzeugluftreifen nach Anspruch 8 oder 9, **dadurch gekennzeichnet, dass** die seitlichen Flanken (3a, 3'a, 3"a, 3b, 3'b, 3"b) der Schraffurrippen (2, 2', 2"), im Querschnitt betrachtet, unter einem Winkel (a, β, γ) von 5° bis 60°, insbesondere von höchstens 30°, zur Seitenwand verlaufen.

11. Fahrzeugluftreifen nach einem der Anspruch 10, **dadurch gekennzeichnet, dass** die seitlichen Flanken (3a, 3'a, 3"a, 3b, 3'b, 3"b) der Schraffurrippen (2, 2', 2") unter unterschiedlich großen Winkeln (β, γ) zur Seitenwand verlaufen, wobei der größere Winkel (γ) um insbesondere 5° bis 30° größer ist als der kleinere.

12. Fahrzeugluftreifen nach einem der Ansprüche 1 bis 11, **dadurch gekennzeichnet, dass** Schraffurrippen (2) vorgesehen sind, welche zumindest abschnittsweise über lokale, insbesondere kuppelartige, vorzugsweise halbkugelförmige, Vorsprünge (5), welche insbesondere eine Höhe (h₂) von 0,1 mm bis 0,3 mm aufweisen, verlaufen.

## Claims

1. Pneumatic vehicle tyre having sidewalls and having at least one hatching area (1) or a hatched area element on at least one sidewall, wherein the hatching area (1) or the area element has a multiplicity of hatching ribs (2, 2', 2") running next to one another and having two lateral flanks (3a, 3'a, 3"a, 3b, 3'b, 3"b), wherein the one lateral flank (3a, 3'a, 3"a) of the hatching ribs (2, 2', 2") has a surface finish which differs from that on the other lateral flank (3b, 3'b, 3"b) of the hatching ribs (2, 2', 2"), and wherein the surface finish of at least one lateral flank (3a, 3'a, 3"a) of the hatching ribs (2, 2', 2") is a three-dimensional structure,
**characterized**
**in that** the three-dimensional structure covers the lateral flank (3a) of the respective hatching rib (2, 2', 2"), or
**in that** the three-dimensional structure consists of a multiplicity of additional ribs (6) which run parallel to one another and at right angles to the extent of the hatching ribs (2) and which have a width (b₂) at their base of in particular 0.1 mm to 0.5 mm.

2. Pneumatic vehicle tyre according to Claim 1, **characterized in that**, when hatching ribs (2) running next to one another are viewed, the flank (3a, 3'a, 3"a) of the one hatching rib (2) with the one surface finish is facing the flank (3a, 3'a, 3"a) of the adjacent hatching rib (2) with the other surface finish.

3. Pneumatic vehicle tyre according to Claim 1 or 2, **characterized in that** the surface finish of both lateral flanks (3a, 3'a, 3"a) of the hatching ribs (2, 2', 2") is a three-dimensional structure.

4. Pneumatic vehicle tyre according to one of Claims 1 to 3, **characterized in that** the three-dimensional structure, which covers the lateral flank (3a) of the respective hatching rib (2, 2', 2"), consists of a multiplicity of elevations and depressions, which are preferably formed directly next to one another, having a height or depth of in particular 0.05 mm to 0.8 mm.

5. Pneumatic vehicle tyre according to one of Claims 1 to 3, **characterized in that** the additional ribs (6) are at mutual distances from one another or directly adjoin one another.

6. Pneumatic vehicle tyre according to one of Claims 1 to 3 or 5, **characterized in that** the additional ribs (6), viewed in cross section, are triangular, trapezoidal or round.

7. Pneumatic vehicle tyre according to one of Claims 1, 2 or 4 to 6, **characterized in that** the one of the lateral flanks (3b, 3'b, 3"b) of the hatching ribs (2, 2', 2") in each case is a smooth surface free of structures.

8. Pneumatic vehicle tyre according to one of Claims 1 to 7, **characterized in that** the hatching ribs (2, 2"), viewed in cross section, are triangular, in particular isosceles triangular.

9. Pneumatic vehicle tyre according to one of Claims 1 to 7, **characterized in that** the hatching ribs (2, 2"), viewed in cross section, are trapezoidal, in particular isosceles trapezoidal.

10. Pneumatic vehicle tyre according to Claim 8 or 9, **characterized in that** the lateral flanks (3a, 3'a, 3"a, 3b, 3'b, 3"b) of the hatching ribs (2, 2', 2") run, viewed in cross section, at an angle (a, β, γ) of 5° to 60°, in particular of at most 30°, in relation to the sidewall.

11. Pneumatic vehicle tyre according to Claim 10, **characterized in that** the lateral flanks (3a, 3'a, 3"a, 3b, 3'b, 3"b) of the hatching ribs (2, 2', 2") run at different angles (β, γ) in relation to the sidewall, the larger angle (γ) being in particular 5° to 30° larger than the smaller one.

12. Pneumatic vehicle tyre according to one of Claims 1 to 11, **characterized in that** hatching ribs (2) are provided which, at least in sections, run over local, in particular dome-like, preferably hemispherical, projections (5), which in particular have a height (h₂) of 0.1 mm to 0.3 mm.

## Revendications

1. Pneumatique de véhicule comprenant des parois latérales et comprenant au moins une surface à hachures (1) ou un élément de surface hachuré sur au moins une paroi latérale, la surface à hachures (1) ou l'élément de surface présentant une pluralité de nervures de hachure (2, 2', 2") s'étendant côte à côte, comprenant deux flancs latéraux (3a, 3'a, 3"a, 3b, 3'b, 3"b), l'un des flancs latéraux (3a, 3'a, 3"a) des nervures de hachure (2, 2', 2") présentant un état de surface qui diffère de celui de l'autre flanc latéral (3b, 3'b, 3"b) des nervures de hachure (2, 2', 2") et l'état de surface d'au moins un flanc latéral (3a, 3'a, 3"a) des nervures de hachure (2, 2', 2") étant une structure tridimensionnelle,
**caractérisé en ce que**
la structure tridimensionnelle recouvre le flanc latéral (3a) de la nervure de hachure respective (2, 2', 2"), ou
**en ce que** la structure tridimensionnelle est constituée d'une pluralité de nervures additionnelles (6) s'étendant parallèlement les unes aux autres et à angle droit par rapport à l'extension des nervures de hachure (2), ayant une largeur (b₂) à leur base de notamment 0,1 mm à 0,5 mm.

2. Pneumatique de véhicule selon la revendication 1, **caractérisé en ce que**, dans le cas de nervures de hachure (2) s'étendant côte à côte, le flanc (3a, 3'a, 3"a) de l'une des nervures de hachure (2) ayant un état de surface est tourné vers le flanc (3a, 3'a, 3"a) de la nervure de hachure (2) voisine ayant l'autre état de surface.

3. Pneumatique de véhicule selon la revendication 1 ou 2, **caractérisé en ce que** l'état de surface des deux flancs latéraux (3a, 3'a, 3"a) des nervures de hachure (2, 2', 2") est une structure tridimensionnelle.

4. Pneumatique de véhicule selon l'une quelconque des revendications 1 à 3, **caractérisé en ce que** la structure tridimensionnelle qui recouvre le flanc latéral (3a) de la nervure de hachure respective (2, 2', 2") est constituée d'une pluralité d'élévations et de creux, de préférence réalisés directement côte à côte, ayant une hauteur ou une profondeur de notamment 0,05 mm à 0,8 mm.

5. Pneumatique de véhicule selon l'une quelconque des revendications 1 à 3, **caractérisé en ce que** les nervures additionnelles (6) présentent des écarts mutuels les unes des autres ou sont directement contiguës les unes aux autres.

6. Pneumatique de véhicule selon l'une quelconque des revendications 1 à 3 ou 5, **caractérisé en ce que** les nervures additionnelles (6), telles que vues en coupe transversale, sont triangulaires, trapézoïdales ou rondes.

7. Pneumatique de véhicule selon l'une quelconque des revendications 1, 2 ou 4 à 6, **caractérisé en ce que** l'un des flancs latéraux (3b, 3'b, 3"b) des nervures de hachure (2, 2', 2") est respectivement une surface lisse dépourvue de structures.

8. Pneumatique de véhicule selon l'une quelconque des revendications 1 à 7, **caractérisé en ce que** les nervures de hachure (2, 2"), telles que vues en coupe transversale, sont triangulaires, notamment triangulaires isocèles.

9. Pneumatique de véhicule selon l'une quelconque des revendications 1 à 7, **caractérisé en ce que** les nervures de hachure (2, 2"), telles que vues en coupe transversale, sont trapézoïdales, notamment trapézoïdales isocèles.

10. Pneumatique de véhicule selon la revendication 8 ou 9, **caractérisé en ce que** les flancs latéraux (3a, 3'a, 3"a, 3b, 3'b, 3"b) des nervures de hachure (2, 2', 2"), tels que vus en coupe transversale, s'étendent selon un angle (a, β, γ) de 5° à 60°, notamment d'au plus 30°, par rapport à la paroi latérale.

11. Pneumatique de véhicule selon la revendication 10, **caractérisé en ce que** les flancs latéraux (3a, 3'a, 3"a, 3b, 3'b, 3"b) des nervures de hachure (2, 2', 2") s'étendent selon des angles (β, γ) de différente taille par rapport à la paroi latérale, l'angle (γ) le plus grand étant notamment de 5° à 30° plus grand que le plus petit.

12. Pneumatique de véhicule selon l'une quelconque des revendications 1 à 11, **caractérisé en ce que** des nervures de hachure (2) qui s'étendent au moins par sections sur des saillies locales (5), notamment en forme de coupole, de préférence hémisphériques, qui présentent notamment une hauteur (h₂) de 0,1 mm à 0,3 mm, sont prévues.
